# FASCICULE DE BREVET EUROPEEN

(11) **EP 0 704 643 B1**
(45) Date de publication et mention de la délivrance du brevet: **10.12.1997**
(21) Numéro de dépôt: 95420260.2
(22) Date de dépôt: 22.09.1995
(51) Int. Cl.: F16H 61/26, F16H 63/30, G05G 3/00

(54) **Elément de renvoi pour mécanisme de changement de rapports dans une boîte de vitesses pour véhicules automobiles**
Umlenkelement für den Gangwechselmechanismus in einem Kraftfahrzeugschaltgetriebe
Deflection device for the shift control mechanism for a motor vehicle gear box

(30) Priorité: 30.09.1994 FR 9412022
(43) Date de publication de la demande: 03.04.1996
(73) Titulaire: ADWEST OCI SA, 42350 La Talaudière (FR)
(72) Inventeur: Tholly, Paul, F-42170 Saint Just Saint Rambert (FR)
(74) Mandataire: Thivillier, Patrick

(56) Documents cités:
- DE-A- 3 829 559
- FR-A- 2 437 952
- FR-A- 2 670 255
- US-A- 4 193 316

## Description

L'invention se rattache au secteur technique des équipements pour automobiles, notamment des boites de vitesses.

Plus particulièrement, cet élément de renvoi de passage trouve une application dans le cas d'une commande de boites de vitesses du type mono-barre découplée. D'une manière parfaitement connue, ce mode de commande comprend, pour l'essentiel, une barre accouplée au pied du levier de vitesses. L'extrémité de cette barre est solidaire transversalement d'une bague ou manchon, dont l'alésage coopère avec l'élément de renvoi, apte à assurer le passage des vitesses.

Dans ce but, cet élément de renvoi présente, en bout d'un bras support, une tête sphérique conformée pour être engagée avec capacité de déplacement multidirectionnel, dans l'alésage de la bague que présente la barre de commande. Sous l'effet de déplacement de la barre de commande par le levier de vitesses, la tête sphérique de l'élément de renvoi, est déplacée dans l'alésage de la bague selon différentes orientations angulaires.

Le bras support, qui reçoit la tête sphérique, est réalisé à partir d'une tôle découpée et profilée, de manière à constituer deux branches disposées angulairement. L'une de ces branches reçoit la tête, tandis que l'autre reçoit une rotule apte à coopérer avec une biellette de passage qui commande la boîte de vitesses. En outre, au niveau de la zone d'intersection des deux branches, le support reçoit un moyeu rapporté fixé par soudure, et destiné à coopérer avec un axe d'articulation solidaire d'une partie du véhicule.

On conçoit que cette conception est relativement compliquée et nécessite un assemblage et un usinage de plusieurs pièces, ce qui augmente les coûts. En effet, il est nécessaire, de rapporter par soudure, le moyeu d'articulation et de sertir la rotule. En outre, l'ensemble de ces pièces doivent être protégées de la corrosion, au moyen d'un traitement de surface spécial.

Par ailleurs, l'usinage doit être très précis, étant donné que les différentes pièces doivent être positionnées selon des entraxes déterminés.

A noter également que la rotule est en acier doux, de sorte qu'il est nécessaire de mettre une protection anti-corrosion.

En outre, pour tenter de diminuer les vibrations, l'extrémité libre de la biellette qui coopère avec la rotule de l'élément de renvoi, présente, généralement, un tampon en caoutchouc qui isole la partie recevant la rotule du corps, avec la possibilité d'un déplacement axial. Cette solution est onéreuse.

L'invention s'est fixée pour but de remédier à ces inconvénients, de manière simple, sûre, efficace et rationnelle.

Le problème que se propose de résoudre l'invention, est de diminuer, d'une manière importante, les coûts, en supprimant notamment, les différentes pièces nécessaires à la réalisation de l'élément de renvoi de passage et, par conséquent, en supprimant les différentes opérations d'assemblage et d'usinage en résultant.

Pour résoudre un tel problème, il a été conçu et mis au point un élément de renvoi de passage constitué par un corps monobloc en matière plastique moulé présentant directement lors du moulage :
- une tête hémisphérique coopérant avec capacité de déplacement, avec une bague que présente en bout une barre de commande actionnée par un levier de vitesses,
- un élément du type rotule apte à assurer l'accouplement d'une biellette de passage qui commande la boîte de vitesses et,
- une bague apte à coopérer avec un axe d'articulation solidaire d'une partie du véhicule.

Avantageusement, la rotule est métallique et carbonitrurée pour résoudre le problème de l'oxydation tout en permettant une meilleure géométrie de la tête sphérique de la rotule.

Compte-tenu de la conception monobloc du corps, la bague est constituée par un insert rapporté surmoulé dans un alésage du corps, ledit insert présentant, à chaque extrémité, des lèvres d'étanchéité.

Un autre problème que se propose de résoudre l'invention, est de diminuer l'usure entre la tête sphérique de l'élément de renvoi et la bague de la barre de commande et de supprimer le jeu au niveau de cet accouplement.

Un tel problème est résolu en ce que la tête sphérique présente un noyau formé directement avec le corps et recevant un anneau de frottement hémisphérique avec capacité de déformation élastique.

Eu égard aux caractéristiques de l'invention, l'ensemble du corps avec ses éléments, à savoir la tête hémisphérique, la rotule et la bague, sont obtenus en une seule opération directement par injection, lesdits éléments étant disposés très sensiblement selon les sommets d'un triangle rectangle.

Pour résoudre le problème posé d'absorber les vibrations, les rotules sont inserrées en combinaison avec une bague en matière souple faisant office d'amortisseur.

Compte-tenu de l'insertion des rotules, en combinaison avec un élément amortisseur, il est possible d'utiliser des biellettes de conception simplifiée. A cet effet, chaque biellette reçoit, par surmoulage, un boitier en matière plastique présentant une empreinte en creux hémisphérique recevant la tête de rotule correspondante.

L'invention est exposée, ci-après plus en détail à l'aide des dessins annexés, dans lesquels :

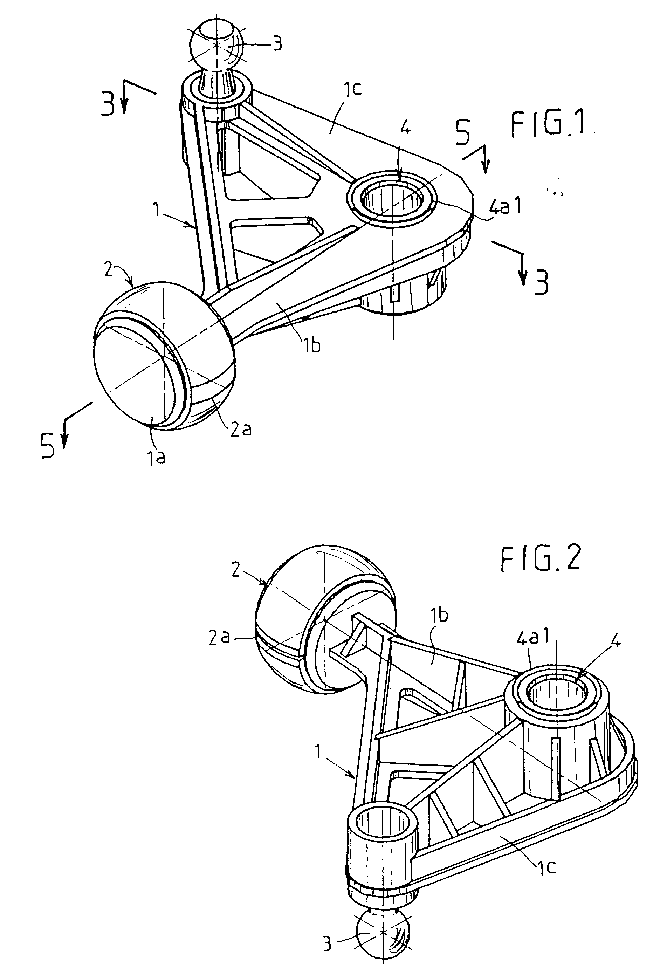

Les figures 1 et 2 sont des vues en perspective de l'élément de renvoi selon l'invention.

La figure 3 est une vue en coupe longitudinal de l'élément de renvoi considérée selon la ligne 3.3 de la figure 1.

La figure 4 est une vue semblable à la figure 3, dans le cas où la rotule est inserrée en combinaison avec une bague amortisseur.

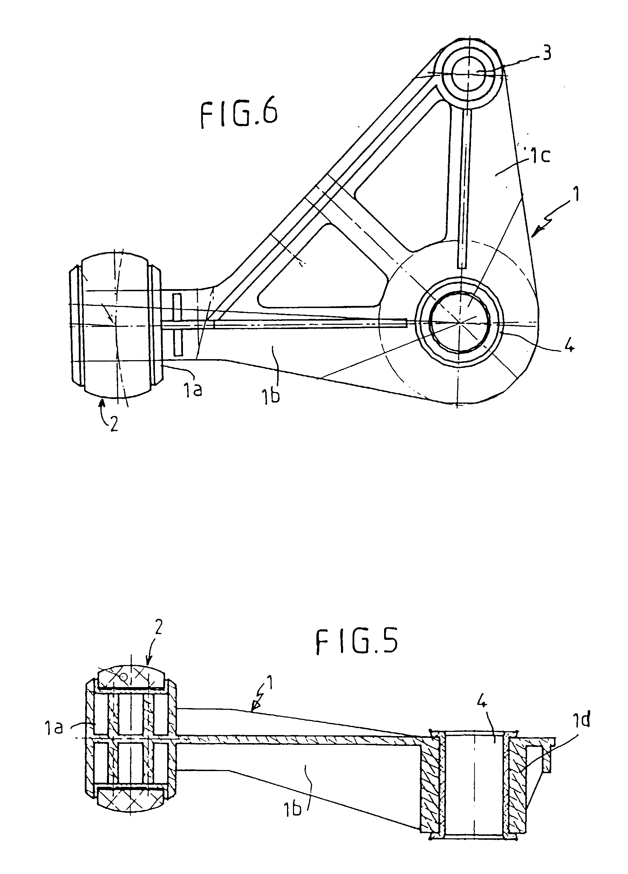

La figure 5 est une vue en coupe longitudinale considérée selon la ligne 5.5 de la figure 1.

La figure 6 est une vue de dessus et en plan de l'élément de renvoi.

L'élément de renvoi de passage est constitué par un corps monobloc (1) en matière plastique moulée, présentant directement lors du moulage, une tête sphérique (2), une rotule (3) et une bague (4). L'ensemble du corps (1) et de ses différents éléments constitutifs (2) (3) (4) sont obtenus en un seule opération directement par injection. Les éléments (2) (3) (4) sont disposés très sensiblement selon les sommets d'un triangle rectangle.

La tête sphérique (2) qui est, de manière connue, destinée à coopérer avec capacité de déplacement avec une bague que présente en bout, la barre de commande actionnée par le levier de vitesses, présente un noyau (1a) formé directement avec le corps, notamment en bout d'une branche (1b). Le noyau (1a) reçoit un anneau de frottement hémisphérique (2a), avec capacité de déformation élastique.

Avantageusement, la conception de la tête sphérique (2) est du type de celle décrite dans la demande de brevet FR 9409729 dont le demandeur de la présente est également titulaire. On rappelle à cet égard, que l'anneau (2a) est fendu transversalement, de manière à faire varier son diamètre, à l'encontre d'organes déformables élastiquement.

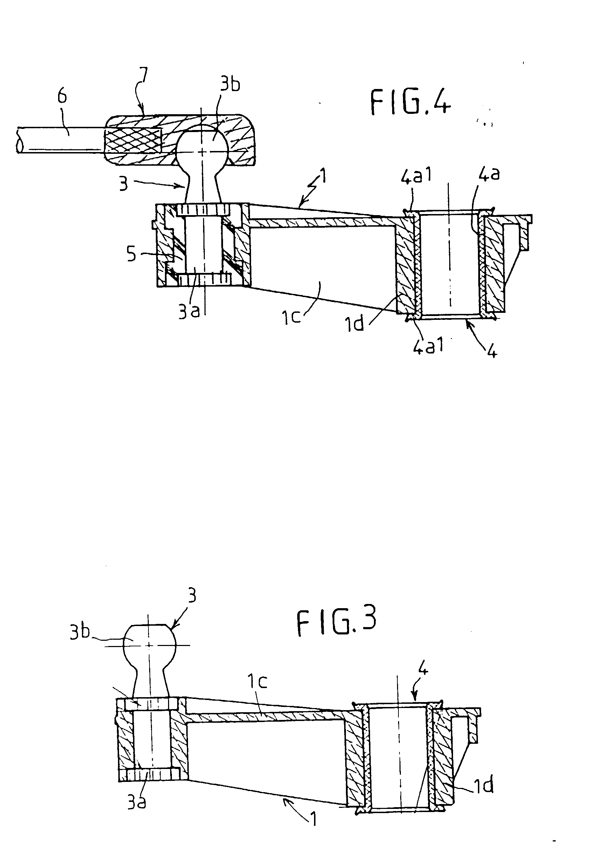

Avantageusement, la rotule (3) est métallique et carbonitrurée afin d'augmenter sa dureté et supprimer tout problème de corrosion. Le corps (3a) de la rotule (3) peut être surmoulé directement avec le corps (1), en bout d'une branche (1c) (figure 3). Ou bien, dans une forme de réalisation préférée, le corps (3a) de la rotule est surmoulé avec le corps (1), en combinaison avec une bague en matière souple (5) faisant office d'amortisseur (figure 4). Dans ces conditions, la rotule (3) peut coopérer avec une biellette (6) du type de celle définie dans la demande de brevet FR 2670255 dont le demandeur de la présente est également titulaire.

Les extrémités de la biellette (6) reçoivent, par surmoulage, un boitier en matière plastique (7) présentant une empreinte en creux (7a) de forme hémisphérique, pour coopérer avec la tête de rotule correspondant (3b). On rappelle que la biellette (6) est la biellette de passage qui commande la boîte de vitesses.

La bague (4) est avantageusement mais non limitativement, disposée dans un plan perpendiculaire ou sensiblement perpendiculaire à celui de la tête sphérique, au niveau de l'intersection des branches (1b) et (1c). La bague (4) est constituée par un insert (4a) surmoulé dans un alésage (1d1) que présente une portée (1d) du corps. L'insert (4), présente, à chaque extrémité, des lèvres d'étanchéité (4a1). La bague (4) est destinée à coopérer avec un axe d'articulation solidaire d'une partie du véhicule.

Les avantages ressortent bien de la description, en particulier on souligne et on rappelle :
- la conception monobloc du corps,
- la diminution des coûts de fabrication,
- le gain de poids,
- l'insertion de la rotule et de la bague notamment lors du moulage du corps,
- la précision obtenue permettant d'avoir une meilleure géométrie des zones fonctionnelles,
- la possibilité d'employer une rotule carbonitrurée assurant, d'une part, une meilleure géométrie de la tête sphérique correspondante, par la suppression d'un revêtement externe et permettant, d'autre part, de diminuer de manière importante l'oxydation pendant l'utilisation du véhicule,
- la possibilité d'utiliser une biellette d'une conception simplifiée, compte-tenu du surmoulage de la rotule en combinaison avec une bague de filtration.

## Revendications

1. Elément de renvoi pour mécanisme de changement de rapports dans une boîte de vitesses pour véhicules automobiles, caractérisé en ce qu'il est constitué par un corps monobloc (1) en matière plastique moulée présentant directement lors du moulage :
- une tête sphérique (2) coopérant avec capacité de déplacement, avec une bague que présente en bout une barre de commande actionnée par un levier de vitesses,
- un élément du type rotule (3) apte à assurer l'accouplement d'une biellette de passage (6) qui commande la boîte de vitesses,
- une bague (4) apte à coopérer avec un axe d'articulation solidaire d'une partie du véhicule.

2. Elément selon la revendication 1, caractérisé en ce que la rotule (3) est métallique.

3. Elément selon la revendication 2, caractérisé en ce que la rotule (3) est carbonitrurée.

4. Elément selon la revendication 1, caractérisé en ce que la bague (4) est constituée par un insert (4a) surmoulé dans un alésage (1d1) du corps.

5. Elément selon la revendication 4, caractérisé en ce que l'insert (4a) présente, à chaque extrémité, des lèvres d'étanchéité (4a1).

6. Elément selon la revendication 1, caractérisé en ce que la tête sphérique (2) présente un noyau (1a) formé directement avec le corps et recevant un anneau de frottement hémisphérique (2a) avec capacité de déformation élastique.

7. Elément selon la revendication 1, caractérisé en ce que l'ensemble du corps (1) avec ses éléments, à savoir la tête sphérique (2), la rotule (3) et la bague (4), sont obtenus en une seule opération directement par injection, lesdits éléments (2) (3) (4) étant disposés très sensiblement selon les sommets d'un triangle rectangle.

8. Elément selon la revendication 1, caractérisé en ce que la rotule (3) est inserrée en combinaison avec une bague en matière souple (5) faisant office d'amortisseur.

9. Dispositif selon la revendication 8, caractérisé en ce que les extrémités de la biellette (6), aptes à coopérer avec la rotule (3), reçoivent, par surmoulage, un boitier (7) en matière plastique présentant une empreinte en creux hémisphérique recevant la tête de rotule correspondante (3a).

## Patentansprüche

1. Vorgelegeelement für Schaltmechanismus in einem Getriebe für Automobile, dadurch gekennzeichnet, daß das Element aus einem einstückigen Körper (1) aus geformtem Kunststoff besteht, der unmittelbar beim Pressen folgende Teile aufweist:
- einen kugelförmigen Kopf (2), der verschiebbar mit einem Ring am Ende einer von einem Ganghebel betätigten Steuerstange zusammenwirkt,
- ein kugelgelenkartiges Element (3), das geeignet ist, für das Ankuppeln einer Nebenpleuelstange (6) zu sorgen, von der das Getriebe gesteuert wird,
- einen Ring (4), der geeignet ist, mit einer Gelenkachse zusammenzuwirken, die mit einem Teil des Fahrzeugs fest verbunden ist.

2. Element nach Anspruch 1, dadurch gekennzeichnet, daß das Kugelgelenk (3) aus Metall besteht.

3. Element nach Anspruch 2, dadurch gekennzeichnet, daß das Kugelgelenk (3) karbonitriert ist.

4. Element nach Anspruch 1, dadurch gekennzeichnet, daß der Ring (4) aus einem Einspritzteil (4a) besteht, das in einer Bohrung (1d1) des Körpers vergossen ist.

5. Element nach Anspruch 4, dadurch gekennzeichnet, daß das Einspritzteil (4a) an beiden Enden Dichtlippen (4al) aufweist.

6. Element nach Anspruch 1, dadurch gekennzeichnet, daß der kugelförmige Kopf (2) einen unmittelbar aus dem Körper ausgeformten Kern (la) aufweist, der einen elastisch verformbaren halbkugelförmigen Reibungsring (2a) aufnimmt.

7. Element nach Anspruch 1, dadurch gekennzeichnet, daß der gesamte Körper mit allen Teilelementen, d.h. Kugelkopf (2), Kugelgelenk (3) und Ring (4), in einem einzigen Arbeitsgang unmittelbar durch Spritzguß hergestellt wird, wobei die Elemente (2) (3) (4) ziemlich genau nach den Spitzen eines rechteckigen Dreiecks angeordnet sind.

8. Element nach Anspruch 1, dadurch gekennzeichnet, daß das Kugelgelenk (3) zusammen mit einem als Dämpfer dienenden Ring aus Weichmaterial (5) eingepaßt ist.

9. Vorrichtung nach Anspruch 8, dadurch gekennzeichnet, daß die Enden der Nebenpleuelstange (6), die geeignet sind, mit dem Kugelgelenk (3) zusammenzuwirken, mit einem Kunststoffgehäuse (7) umspritzt werden, das eine halbkugelförmige Vertiefung für die Aufnahme des entsprechenden Kugelgelenkkopfes (3a) aufweist.

## Claims

1. Transmission element for a gear changing mechanism in a gearbox for motor vehicles characterised in that it consists of a one-piece body (1) made of moulded plastic having directly the following features at the time of moulding:
- a spherical head (2) with the ability to move that cooperates with a ring on the end of a control rod actuated by a gear lever,
- a ball-joint type element (3) capable of ensuring the connection of a connecting rod (6) that controls the gearbox,
- a ring (4) capable of cooperating with a hinge shaft that is joined to part of the vehicle.

2. Element as claimed in claim 1 characterised in that the ball joint (3) is made of metal.

3. Element as claimed in claim 2 characterised in that the ball joint (3) is carbonitrided.

4. Element as claimed in claim 1 characterised in that the ring (4) consists of an insert (4a) moulded into a bore (1d1) in the body.

5. Element as claimed in claim 4 characterised in that the insert (4a) has, at each of its ends, sealing lips (4a1).

6. Element as claimed in claim 1 characterised in that the spherical head (2) has a core (la) formed directly on the body and which accommodates a hemispherical friction ring (2a) capable of elastic deformation.

7. Element as claimed in claim 1 characterised in that the body assembly (1) with its components, namely the spherical head (2), ball joint (3) and ring (4) are produced in a single operation by injection moulding, said components (2) (3) (4) being arranged essentially like the vertices of a rectangular triangle.

8. Element as claimed in claim 1 characterised in that ball joint (3) is inserted in combination with a ring (5) made of a flexible material that acts as a shock absorber.

9. Device as claimed in claim 8 characterised in that the ends of the connecting rod (6) are capable of cooperating with ball joint (3) and accommodate a moulded on case (7) made of plastic that has a hemispherical hollow recess that accommodates the head of the corresponding ball joint (3a).
